# EUROPÄISCHE PATENTANMELDUNG

(11) **EP 1 026 053 A2**
(43) Veröffentlichungstag der Anmeldung: **09.08.2000**
(21) Anmeldenummer: 00101162.6
(22) Anmeldetag: 21.01.2000
(51) Int. Cl.: B60R 22/195

(54) **Seilumlenkung für einen pyrotechnischen Gurtstraffer**

(30) Priorität: 03.02.1999 DE 29901821 U
(71) Anmelder: Dittrich, Klaus-Jürgen, 28832 Achim (DE)
(72) Erfinder: Dittrich, Klaus-Jürgen, 28832 Achim (DE)

(57) **Zusammenfassung**

Seilumlenkung (1) für einen pyrotechnischen Gurtstraffer, mit einer Halterung (4) zur Befestigung einer pyrotechnischer Zylinder-/Kolbenanordnung (20), mit mindestens einem Seilkanal (6) zur Umlenkung mindestens eines Zugseiles (22) von der Zylinder-/Kolbenanordnung zu einem Gurtschloß (30) oder dergleichen, wobei die Seilumlenkung an der Karosserie eines Kraftfahrzeuges befestigbar ist,
gekennzeichnet durch einen Formblock (2), der die Halterung (4) für die Zylinder-/Kolbenanordnung, und den/die Seilkanäle (6) enthält, und einen Mantel (10), der den Formblock (2) eng umhüllt und zwei einander überlappende, vom Formblock (2) seitwärts abstehende Querlaschen (12,14) zur Befestigung der Seilumlenkung aufweist.

## Beschreibung

Die Erfindung betrifft eine Seilumlenkung für einen pyrotechnischen Gurtstraffer, mit einer Halterung zur Befestigung einer pyrotechnischen Zylinder/Kolbenanordnung, mit mindestens einem Seilkanal zur Umlenkung mindestens eines Zugseiles von der Zylinder-/Kolbenanordnung zu einem Gurtschloß oder dergleichen, wobei die Seilumlenkung an der Karosserie eines Kraftfahrzeuges befestigbar ist.

Aus der EP 0 685 371 ist ein pyrotechnischer Gurtstraffer bekannt, der eine Seilumlenkung der eingangs genannten Art besitzt, bei welcher zwei Seilkanäle in vorgegebenem Abstand von einem zentralen Befestigungsmittel sich einen vorgegebenen Bogenwinkel um das Befestigungsmittel herum erstrecken, so daß die Zugseilstränge von dem Kolben kommend einen entsprechenden Bogenwinkel um das zentrale Befestigungsmittel herum umgelenkt werden und dann zu einem Gurtschloß laufen. Da beim Auslösen eines pyrotechnischen Gurtstraffers der Kolben unter der Wirkung eines explodierenden Treibmittels im Zylinder schlagartig in die Straffposition geschossen wird, sind beim Auslösen des Gurtstraffers die Zugseilstränge mit erheblichen Zugkräften belastet, die sowohl Kräfte als auch Lastmomente auf die Seilumlenkung und die Befestigungsmittel ausüben.

Aufgabe der Erfindung ist es daher, eine Seilumlenkung der eingangs genannten Art derart weiterzubilden, daß eine sichere und zuverlässige Befestigung der Seilumlenkung an der Karosserie des Kraftfahrzeuges gewährleistet ist.

Diese Aufgabe wird bei der Seilumlenkung der eingangs genannten Art erfindungsgemäß gelöst, durch einen Formblock, der die Halterung für die Zylinder/Kolbenanordnung und den/die Seilkanäle enthält, und einen Mantel, der den Formblock eng umhüllt und zwei einander überlappende, vom Formblock seitwärts abstehende Querlaschen zur Befestigung der Seilumlenkung aufweist.

Die Vorteile der Erfindung liegen insbesondere darin, daß die Seilumlenkung aus zwei Teilen besteht. Ein Formblock enthält den bzw. die Seilkanäle und auch die Halterung für die Zylinder-Kolbenanordnung, und ein Mantel aus besonders biegesteifem und reißfestem Material umgibt den Formblock und geht in zwei sich überlappende Querlaschen über, an denen die Befestigungsmittel - in vorgegebenem seitlichen Abstand von dem bzw. den Zugseilen - angreifen und an der Karosserie des Kraftfahrzeuges befestigt sind. Da der Formblock wegen seiner komplexen Gestalt und des dadurch vorgegebenen Fertigungsverfahrens nur eine begrenzte Festigkeit aufweisen kann, wird der Formblock von einem Mantel aus ausreichend biegefesten und bruchfesten Material umgeben, und der Mantel geht einstückig in die seitwärts abstehenden Querlaschen über, welche die bei einem Straffvorgang auftretenden Kräfte und Lastmomente zuverlässig aufnehmen, ohne daß sich die Seilumlenkung von der Kfz-Karosserie losreißt.

Gemäß einer bevorzugten Ausführungsform der Erfindung liegen die beiden Querlaschen flächig aufeinander und besitzen eine gemeinsame Bohrung, durch die hindurch Befestigungsmittel, beispielsweise ein Gewindezapfen oder eine Schraube in die Karosserie eingeschraubt werden, um die Seilumlenkung fest mit der Karosserie zu verbinden. Die Querlaschen gehen bevorzugt einstückig in den Mantel über, Mantel und Querlaschen bestehen bevorzugt aus einem Stahlblech ausreichender Dicke und ausreichend großer Festigkeit. Der Formblock ist demgegenüber vorteilhafterweise als Gußteil oder als Preßteil hergestellt.

Gemäß einer bevorzugten Ausführungsform der Erfindung umhüllt der Mantel die zwischen den beiden Stirnseiten liegende Mantelfläche des Formblocks, der senkrecht zur Mantelfläche einen im wesentlichen rechteckförmigen oder quadratischen Querschnitt aufweist.

Die Halterung für die Zylinder-/Kolbenanordnung ist an einer Stirnseite des Formblocks angeformt, der bzw. die Seilkanäle verlaufen vom blockseitigen Ende der Zylinder-/Kolbenanordnung gekrümmt durch den Formblock hindurch und treten entweder an der Deckfläche des Formblocks oder an der anderen Stirnfläche aus dem Formblock wieder aus.

Vorteilhafte Weiterbildung der Erfindung sind durch die Merkmale der Unteransprüche gekennzeichnet.

Im folgenden wir ein Ausführungsbeispiel der Erfindung anhand der Zeichnungen näher erläutert. Es zeigen:
- Figur 1: eine Seitenansicht eines pyrotechnischen Gurtstraffers mit der erfindungsgemäßen Seilumlenkung;
- Figur 2: eine Aufsicht auf den pyrotechnischen Gurtstraffer gemäß Figur 1 und
- Figur 3: eine Frontansicht des Gurtstraffers gemäß den Figuren 1 und 2.

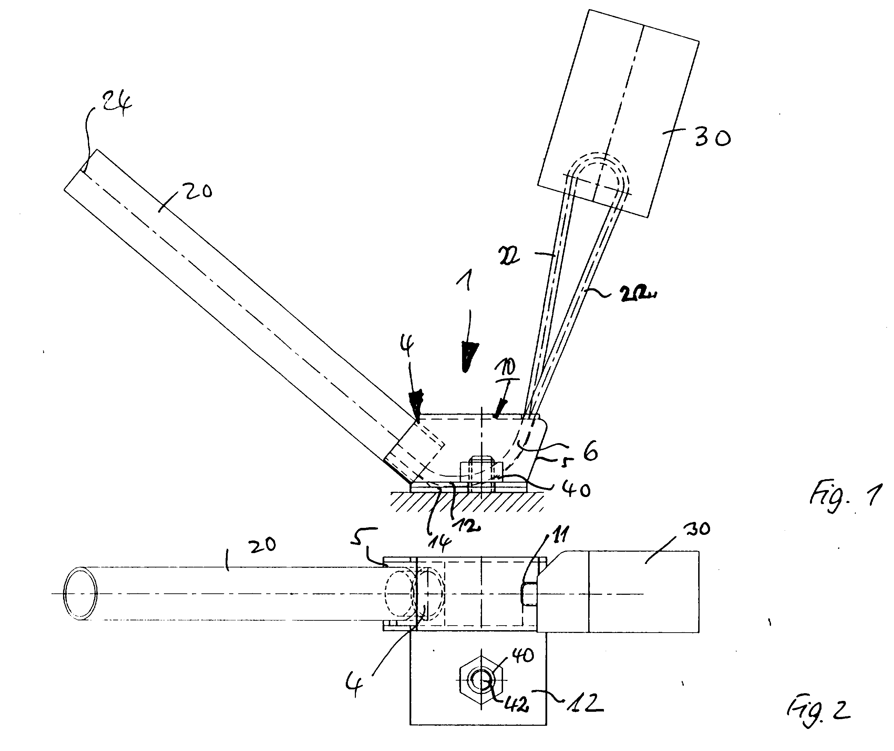

In den Figuren 1 bis 3 ist ein pyrotechnischer Gurtstraffer schematisch dargestellt, der eine pyrotechnische Zylinder-/Kolbenanordnung 20 besitzt, die an der Stirnseite 5 einer Seilumlenkung 1 befestigt ist. Durch die Seilumlenkung 1 hindurch verlaufen zwei parallele Seilkanäle 6, welche zwei Zugseile oder Zugseilstränge 22 von dem Kolben der Zylinder-/Kolbenanordnung 20 beispielsweise zu einem Gurtschloß 30 umlenken. Die Zugseilstränge 22 sind an dem Gurtschloß 30 befestigt. Die Seilumlenkung 1 ist mit Befestigungsmitteln 40, 42 an der Karosserie eines Fahrzeuges befestigt. Als Befestigungsmittel 40, 42 eignen sich Metallschrauben, Muttern, Gewindezapfen etc..

Die Seilumlenkung 1 enthält einen Formblock 2, der zwei parallele Seitenflächen 7, eine untere Grundfläche 8 und eine obere Deckfläche 9 aufweist, die im wesentlichen parallel zur unteren Grundfläche 8 verläuft. Zwischen den beiden Seitenflächen 7 befindet sich an einer Stirnseite 5 die Halterung 4.zur Aufnahme der Zylinder-/Kolbenanordnung 20, von der die beiden Seilkanäle 6 gekrümmt durch den Formblock 2 hindurch verlaufen und - in der dargestellten Ausführungsform - an der Deckfläche 9 aus dem Formblock 2 austreten. Der Formblock 2 wird bevorzugt als Gußteil oder Preßteil hergestellt.

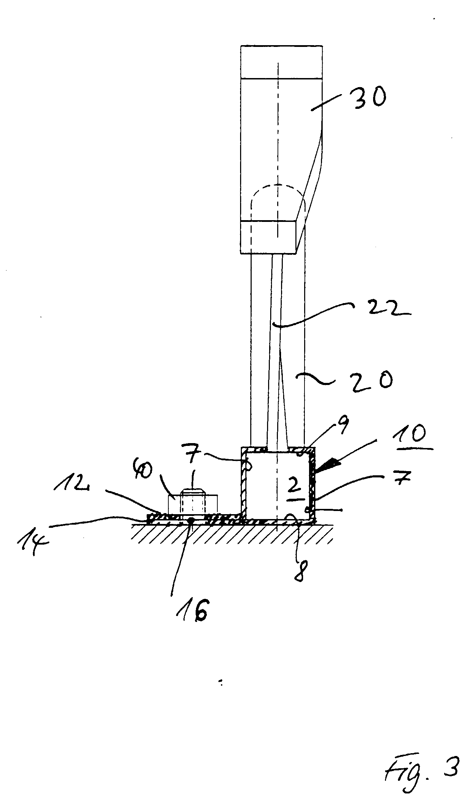

Wie insbesondere den Figuren 2 und 3 entnehmbar ist, ist der Formblock 2 von einem Mantel 10 aus einem ausreichend starken und festen Blech, beispielsweise einem geeigneten Stahlblech eng umhüllt. Der Mantel 10 geht einstückig in zwei Querlaschen 12, 14 über, welche die Endabschnitte des Mantels bilden und gegeneinander anliegen. In den Endabschnitten 12, 14 befindet sich eine gemeinsame Bohrung 16, durch welche die Befestigungsmittel 40, 42 hindurchgeführt sind.

Der Formblock 2 besitzt zwei Stirnseiten 5, und zwischen den Stirnseiten eine umlaufende Mantelfläche, bestehend aus einer Grundfläche 8, an die sich rechtwinklig zwei beabstandete ebene Seitenflächen 7 und parallel zur Grundfläche 8 eine Deckfläche 9 anschließt. Die erste Querlasche 14 geht eben in einen Basisabschnitt - unterhalb der Grundfläche 8 - über, die rechtwinklig abgewinkelt in einen ersten Seitenabschnitt, der ersten Seitenfläche 7 benachbart, übergeht und anschließend rechtwinklig in einen Deckabschnitt über der Deckfläche 9 und daran anschließend rechtwinklig in einen zweiten Seitenabschnitt, an der zweiten Seitenfläche 7, übergeht und dann rechtwinklig in die erste Querlasche 12 zu mündet, die flächig auf der zweiten Querlasche 14 aufliegt. Der Deckabschnitt des Mantels 10 besitzt eine Ausnehmung 11 an der Stelle, an welcher die beiden Zugseilstränge 22 die Deckfläche 9 des Formblocks 2 verlassen. Alternativ sind jedoch auch andere Querschnitte des Formblocks 2 möglich.

## Patentansprüche

1. Seilumlenkung für einen pyrotechnischen Gurtstraffer, mit einer Halterung zur Befestigung einer pyrotechnischer Zylinder-/Kolbenanordnung, mit mindestens einem Seilkanal zur Umlenkung mindestens eines Zugseiles von der Zylinder/Kolbenanordnung zu einem Gurtschloß oder dergleichen, wobei die Seilumlenkung an der Karosserie eines Kraftfahrzeuges befestigbar ist,
gekennzeichnet durch einen Formblock (2), der die Halterung (4) für die Zylinder/Kolbenanordnung, und den/die Seilkanäle (6) enthält, und einen Mantel (10), der den Formblock (2) eng umhüllt und zwei einander überlappendende, vom Formblock (2) seitwärts abstehende Querlaschen (12, 14) zur Befestigung der Seilumlenkung aufweist.

2. Seilumlenkung nach Anspruch 1, dadurch gekennzeichnet, daß die Querlaschen (12, 14) flächig aneinander anliegen und mindestens eine gemeinsame Bohrung (16) besitzen.

3. Seilumlenkung nach einem der vorstehenden Ansprüche, dadurch gekennzeichnet, daß die Querlaschen (12, 14) einstückig in den Mantel (10) übergehen.

4. Seilumlenkung nach einem der vorstehenden Ansprüche, dadurch gekennzeichnet, daß der Mantel aus Stahlblech besteht.

5. Seilumlenkung nach einem der vorstehenden Ansprüche, dadurch gekennzeichnet, daß der Formblock (2) als Gußteil oder Preßteil ausgebildet ist.

6. Seilumlenkung nach einem der vorstehenden Ansprüche, dadurch gekennzeichnet, daß der Mantel (10) die zwischen den beiden Stirnseiten (5) liegende Mantelfläche (7, 8, 9) des Formblocks (2) umhüllt.

7. Seilumlenkung nach einem der vorstehenden Ansprüche, dadurch gekennzeichnet, daß der Formblock (2) senkrecht zur Mantelfläche (7, 8, 9) einen rechteckförmigen oder quadratischen Querschnitt aufweist.

8. Seilumlenkung nach einem der vorstehenden Ansprüche, dadurch gekennzeichnet, daß der Formblock (2) parallele Seitenflächen (7), eine ebene Grundfläche (8) und hierzu parallel eine ebene Deckfläche (14) aufweist, und daß die sich überlappenden Querlaschen (12, 14) in Verlängerung der Grundfläche (8) quer von dem Formblock abstehen.

9. Seilumlenkung nach einem der vorstehenden Ansprüche, dadurch gekennzeichnet, daß die Halterung (4) für die Zylinder-/Kolbenanordnung stirnseitig am Formblock (2) angeformt ist, und daß der/die Seilkanäle (6) von der Zylinder/Kolbenanordnung gekrümmt durch den Formblock (2) hindurch verlaufen und an der Deckfläche (9) des Formblocks oder an einer der Halterungen gegenüberliegenden Stirnfläche (5) aus dem Formblock austreten.

10. Seilumlenkung nach einem der vorstehenden Ansprüche, dadurch gekennzeichnet, daß die erste Querlasche (14) eben in einen Basisabschnitt unter der Grundfläche (8), anschließend in einen ersten Seitenabschnitt, einen parallel zum Basisabschnitt verlaufenden Deckabschnitt, einen zweiten Seitenabschnitt und schließlich in die zweite Querlasche (12) übergeht.
